# EUROPEAN PATENT APPLICATION

(11) **EP 4 201 650 A1**
(43) Date of publication of application: **28.06.2023**
(21) Application number: 22863386.3
(22) Date of filing: 29.08.2022
(51) Int. Cl.: B29C 64/321, B29C 64/336, B29C 64/393, B33Y 30/00, B33Y 50/02

(54) **EXTRUSION DEVICE AND 3D PRINTER**

(30) Priority: 30.08.2021 CN 202122068155 U
(71) Applicant: Shenzhen Anycubic Technology Co., Ltd., Shenzhen, Guangdong 518000 (CN)
(72) Inventor: LIAO, Qiming, Shenzhen, Guangdong 518000 (CN); ZHOU, Chengli, Shenzhen, Guangdong 518000 (CN); YU, Wei, Shenzhen, Guangdong 518000 (CN)
(74) Representative: Haseltine Lake Kempner LLP
(86) International application number: PCT/CN2022/115499
(87) International publication number: WO 2023/030250

(57) **Abstract**

The present disclosure provides an extrusion device and a 3D printer. The extrusion device includes a feeding mechanism, a discharging mechanism, a first driving mechanism, a switching mechanism and a second driving mechanism. The feeding mechanism includes a first feeding pipe and a second feeding pipe. The discharging mechanism includes a discharging pipe connected to the first feeding pipe and the second feeding pipe. The first driving mechanism is used for driving a consumable in the first feeding pipe or the second feeding pipe to move, the switching mechanism corresponding to the first feeding pipe and the second feeding pipe, and the second driving mechanism corresponding to the switching mechanism used for driving the switching mechanism to switch between a first state and a second state. The working efficiency of the apparatus can be improved.

## Description

### TECHNICAL FIELD

The present disclosure relates to the technical field of 3D printing, and in particular to an extrusion device and a 3D printer.

### BACKGROUND

Currently, a fused deposition 3D printer can generally load only a roll of consumable, and when the roll of consumable is used up for printing, an operator needs to manually load the next roll of consumable to continue printing. If the operator is not on site when a roll of consumable is used up, the 3D printer usually can only pause printing and cannot continue printing until the operator loads a new consumable, resulting in unnecessary waste of work hours and a low printing efficiency.

Therefore, the 3D printer in the prior art has a low printing efficiency.

### SUMMARY

Embodiments of the present disclosure provide an extrusion device and a 3D printer in order to solve the problem of a low printing efficiency in the prior art.

In order to solve the technical problem mentioned above, the embodiments of the present disclosure adopt the following technical solutions.

In a first aspect, an embodiment of the present disclosure provides an extrusion device, including a feeding mechanism, a discharging mechanism, a first driving mechanism, a switching mechanism and a second driving mechanism, the feeding mechanism including a first feeding pipe and a second feeding pipe, the discharging mechanism including a discharging pipe connected to the first feeding pipe and the second feeding pipe, the first driving mechanism being used for driving a consumable in the first feeding pipe or the second feeding pipe to move, the switching mechanism corresponding to the first feeding pipe and the second feeding pipe, and the second driving mechanism corresponding to the switching mechanism and being used for driving the switching mechanism to switch between a first state and a second state; wherein when the switching mechanism is in the first state, the first driving mechanism is used for driving the consumable in the first feeding pipe to move; and when the switching mechanism is in the second state, the first driving mechanism is used for driving the consumable in the second feeding pipe to move.

In a second aspect, an embodiment of the present disclosure provides a 3D printer, including an extrusion device provided in the first aspect.

In an embodiment of the present disclosure, the feeding mechanism of the extrusion device is provided with two feeding pipes, and the second driving mechanism drives the switching mechanism to switch the state, so as to switch between feeding by the first feeding pipe or feeding by the second feeding pipe, so that after the consumable delivered in one of the first feeding pipe and the second feeding pipe is used up, the other of the first feeding pipe and the second feeding pipe can continue delivering the consumable without stopping the apparatus, thereby achieving automatic continuous feeding of the apparatus and improving the working efficiency of the apparatus. In addition, the first feeding pipe and the second feeding pipe may also respectively deliver different types of consumables, and the second driving mechanism drives the switching mechanism to switch the state, so as to flexibly switch the types of consumables to be extruded, thereby improving the operation flexibility of the apparatus.

### BRIEF DESCRIPTION OF THE DRAWINGS

In order to more clearly illustrate the technical solutions of the embodiments of the present disclosure, the drawings used in the description of the embodiments of the present disclosure will be briefly described below. Obviously, the drawings in the following description are only some embodiments of the present disclosure, and a person of ordinary skill in the art can obtain other drawings according to these drawings without involving any inventive effort.
FIG. 1 is a three-view diagram of an extrusion device according to an embodiment of the present disclosure;
FIG. 2 is a first axonometric diagram of an extrusion device according to an embodiment of the present disclosure;
FIG. 3 is a second axonometric diagram of an extrusion device according to an embodiment of the present disclosure;
FIG. 4 is an exploded view of an extrusion device according to an embodiment of the present disclosure;
FIG. 5 is a partial sectional view taken along line C-C in FIG. 1;
FIG. 6a is a structural perspective diagram of a feeding mechanism in an extrusion device according to an embodiment of the present disclosure;
FIG. 6b is a left view of a feeding mechanism in an extrusion device according to an embodiment of the present disclosure;
FIG. 6c is an exploded view of a feeding mechanism in an extrusion device according to an embodiment of the present disclosure;
FIG. 7a is a structural perspective diagram of a discharging mechanism in an extrusion device according to an embodiment of the present disclosure;
FIG. 7b is an exploded view of a discharging mechanism in an extrusion device according to an embodiment of the present disclosure;
FIG. 8 is an internal structural diagram of a first detection mechanism in an extrusion device according to an embodiment of the present disclosure;
FIG. 9a is a first partial sectional view taken along line F-F in FIG. 6a, which is a partial sectional view of a feeding mechanism in a first working state in an extrusion device according to an embodiment of the present disclosure;
FIG. 9b is a second partial sectional view taken along line F-F in FIG. 6a, which is a partial sectional view of a feeding mechanism in a second working state in an extrusion device according to an embodiment of the present disclosure;
FIG. 10a is a partial sectional view of a discharging mechanism in a first working state in an extrusion device according to an embodiment of the present disclosure;
FIG. 10b is a partial sectional view of a discharging mechanism in a second working state in an extrusion device according to an embodiment of the present disclosure;
FIG. 11a is a sectional view taken along line D-D (side A) in FIG. 1 with a switching mechanism being in a first state;
FIG. 11b is a sectional view taken along line E-E (side B) in FIG. 1 with the switching mechanism being in the first state;
FIG. 12a is an exploded view of a first connecting member in an extrusion device according to an embodiment of the present disclosure;
FIG. 12b is an exploded view of a second connecting member in an extrusion device according to an embodiment of the present disclosure;
FIG. 13a is a schematic structural diagram of a first regulating member and a second regulating member in an extrusion device according to an embodiment of the present disclosure;
FIG. 13b is an exploded view of a first regulating member and a second regulating member in an extrusion device according to an embodiment of the present disclosure;
FIG. 14 is an exploded view of a second driving mechanism in an extrusion device according to an embodiment of the present disclosure;
FIG. 15a is a schematic structural diagram of a second driving mechanism in a first working state in an extrusion device according to an embodiment of the present disclosure;
FIG. 15b is a schematic structural diagram of a second driving mechanism in a second working state in an extrusion device according to an embodiment of the present disclosure;
FIG. 16 is a schematic structural diagram of a driving wheel in an extrusion device according to an embodiment of the present disclosure;
FIG. 17 is a schematic structural diagram of a support in an extrusion device according to an embodiment of the present disclosure;
FIG. 18 is a first schematic diagram of a working flow of an extrusion device according to an embodiment of the present disclosure; and
FIG. 19 is a second schematic diagram of a working flow of an extrusion device according to an embodiment of the present disclosure.

### DETAILED DESCRIPTION OF THE EMBODIMENTS

The technical solutions of the embodiments of the present disclosure will be clearly and completely described below with reference to the accompanying drawings of the embodiments of the present disclosure, and obviously, the embodiments described are some, rather than all, of the embodiments of the present disclosure. On the basis of the embodiments of the present disclosure, all other embodiments obtained by a person of ordinary skill in the art without involving any inventive effort shall fall within the scope of protection of the present disclosure.

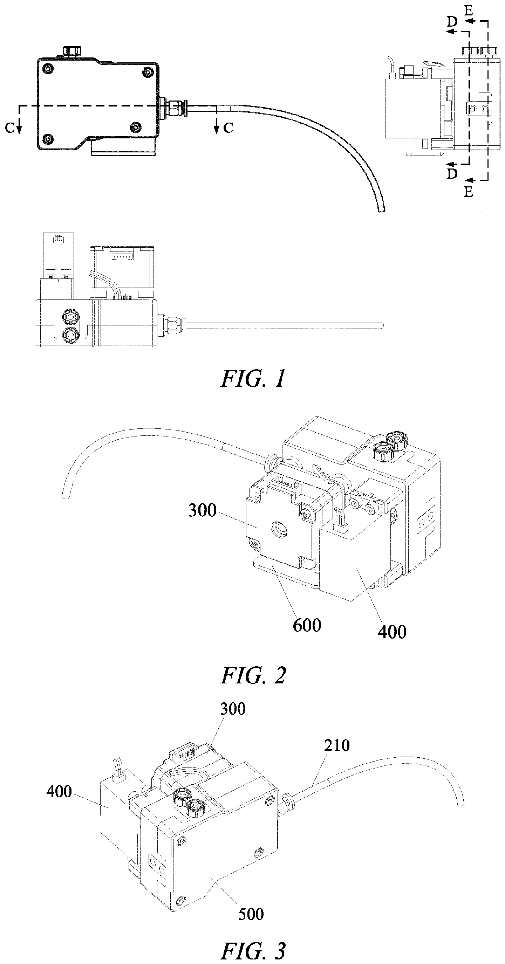

Referring to FIGS. 1 to 17, an embodiment of the present disclosure provides an extrusion device.

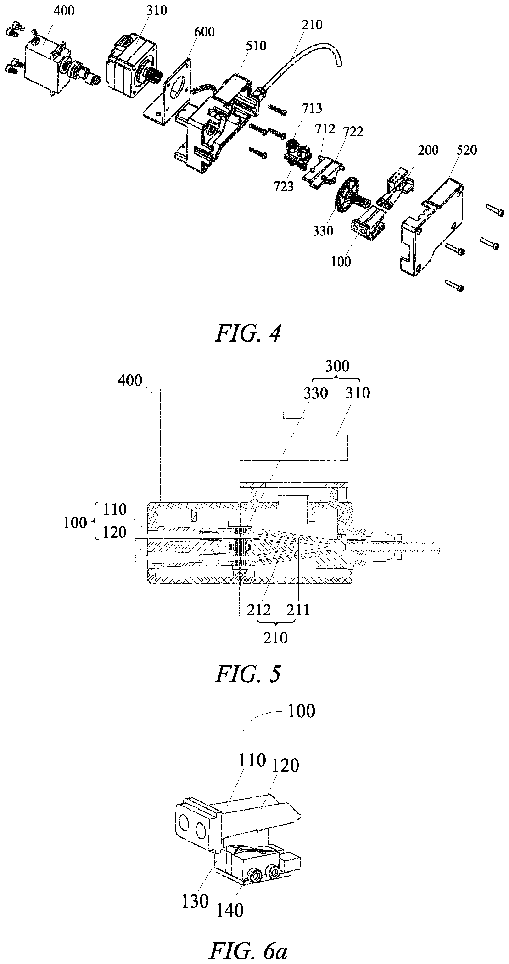

As shown in FIGS. 1 to 4, the extrusion device includes a feeding mechanism 100, a discharging mechanism 200, a first driving mechanism 300, a switching mechanism (not shown), and a second driving mechanism 400. As shown in FIG. 5, the feeding mechanism 100 includes a first feeding pipe 110 and a second feeding pipe 120. The discharging mechanism 200 includes a discharging pipe 210. The discharging pipe 210 is connected to the first feeding pipe 110 and the second feeding pipe 120. The first driving mechanism 300 is used for driving a consumable in the first feeding pipe 110 or the second feeding pipe 120 to move. The switching mechanism corresponds to the first feeding pipe 110 and the second feeding pipe 120, and the second driving mechanism 400 corresponds to the switching mechanism and is used for driving the switching mechanism to switch between a first state and a second state.

When the switching mechanism is in the first state, the first driving mechanism 300 is used for driving the consumable in the first feeding pipe 110 to move; and when the switching mechanism is in the second state, the first driving mechanism 300 is used for driving the consumable in the second feeding pipe 120 to move.

For convenience of description and understanding, herein, the side where the first feeding pipe 110 is located is defined as an A side, and the consumable in the first feeding pipe 110 is defined as an A consumable; and the side where the second feeding pipe 120 is located is defined as a B side, and the consumable in the second feeding pipe 120 is defined as a B consumable.

In a specific embodiment, the extrusion device further includes a housing 500, and the feeding mechanism 100 and the discharging mechanism 200 may be accommodated in the housing 500. Optionally, the housing 500 may include a first housing 510 and a second housing 520 connected to the first housing 510. The feeding mechanism 100 and the discharging mechanism 200 may be fixed in the housing 500 by means of fasteners such as screws, nuts, etc.

In an optional embodiment, as shown in FIG. 5, the discharging pipe 210 is a Y-shaped pipe that is extended by a first pipe 211 and a second pipe 212 at one end, where the first pipe 211 and the second pipe 212 are arranged at an included angle, and that is a common discharging channel at the other end. The first pipe 211 corresponds to the first feeding pipe 110, and the first pipe 211 may be connected to the first feeding pipe 110, or the first pipe 211 may not be connected to the first feeding pipe 110, but a port of the first pipe 211 is opposite a port of the first feeding pipe 110, such that the consumable can be smoothly moved from the first feeding pipe 110 to the first pipe 211. The second pipe 212 corresponds to the second feeding pipe 120, and the second pipe 212 may be connected to the second feeding pipe 120, or the second pipe 212 may not be connected to the second feeding pipe 120, but a port of the second pipe 212 is opposite a port of the second feeding pipe 120, such that the consumable can be smoothly moved from the second feeding pipe 120 to the second pipe 212. With such an arrangement, the space required for the feeding structure 100 and the discharging mechanism 200 can be reduced, and feeding can also be carried out more smoothly. In a specific embodiment, the A consumable may be extruded after passing through the first feeding pipe 110, the first pipe 211 and the common discharging channel, and the B consumable may be extruded after passing through the second feeding pipe 120, the second pipe 212 and the common discharging channel.

It should be noted that the first feeding pipe 110 and the second feeding pipe 120 may be arranged in parallel, or the first feeding pipe and the second feeding pipe may not be arranged in parallel, which is not limited herein.

The first driving mechanism 300 may be entirely accommodated in the housing 500, or may be partially accommodated in the housing 500. In an optional embodiment, the first driving mechanism 300 corresponds to the feeding mechanism 100, i.e., at least some of components of the first driving mechanism 300 correspond to the feeding mechanism 100 in position, may be connected to at least one of the first feeding pipe 110 and the second feeding pipe 120, or may not be connected to the first feeding pipe 110 and the second feeding pipe 120, and specifically, two manners may be included: 1) at least some of the components of the first driving mechanism 300 correspond to both the first feeding pipe 110 and the second feeding pipe 120; and 2) when the switching mechanism is in different states, the first driving mechanism 300 corresponds to the first feeding pipe 110 or the second feeding pipe 120. In another optional embodiment, when the discharging pipe 210 is extended by the first pipe 211 and the second pipe 212 at one end, the first driving mechanism 300 may also correspond to the discharging mechanism 200, and specifically, two manners may be included: 1) the first driving mechanism 300 corresponds to both the first pipe 211 and the second pipe 212; 2) when the switching mechanism is in different states, the first driving mechanism 300 corresponds to the first pipe 211 or the second pipe 212. Alternatively, the first driving mechanism 300 corresponds to both the feeding mechanism 100 and the discharging mechanism 200.

In a specific embodiment, the port of the first pipe 211 is opposite the port of the first feeding pipe 110, and there is a first gap between the port of the first pipe 211 and the port of the first feeding pipe 110; and the port of the second pipe 212 is opposite the port of the second feeding pipe 120, and there is a second gap between the port of the second pipe 212 and the port of the second feeding pipe 120. A part of the first driving mechanism 300 is embedded into the first gap and can be in contact with the A consumable moving in the first feeding pipe 110, and a part thereof is embedded into the second gap and can be in contact with the B consumable moving in the second feeding pipe 120.

The switching mechanism may be entirely accommodated in the housing 500, or may be partially accommodated in the housing 500. The switching mechanism may be connected to the housing 500 by means of fasteners such as screws, nuts, etc. The second driving mechanism 400 may be entirely accommodated in the housing 500, or may be partially accommodated in the housing 500.

The A consumable and the B consumable may be similar consumables. In this case, the first driving mechanism 300 may first drive the A consumable to move until the A consumable is used up, and the second driving mechanism 400 may then drive the switching mechanism to switch the state, such that the first driving mechanism 300 continues driving the B consumable to move. During delivering the B consumable by the second feeding pipe 120, an operator may prepare the A consumable, and after the B consumable is used up, the second driving mechanism 400 may again drive the switching mechanism to switch the state, such that the first driving mechanism 300 drives the newly loaded A consumable to move. In this way, the extrusion device can achieve automatic continuous feeding of similar consumables.

The A consumable and the B consumable may be different types of consumables, and the different types of consumables mentioned above may be consumables of different materials, or consumables of different colors, which is not limited herein. In this case, based on a preset program, the first driving mechanism 300 may first drive one of the A consumable or the B consumable to move, and when the type of the consumables needs to be switched, the second driving mechanism 400 can drive the switching mechanism to switch the state, such that the first driving mechanism 300 drives the other of the A consumable or the B consumable to move. In this way, the extrusion device can achieve the orderly delivery of two types of consumables.

It should be noted that the feeding mechanism 100 may also include two or more feeding pipes, which may be specifically determined according to actual situations. The embodiment of the present disclosure is illustrated by taking the feeding mechanism 100 including the first feeding pipe 110 and the second feeding pipe 120 as an example. In addition, a timing when the second driving mechanism 400 drives the switching mechanism to switch the state may be determined based on a preset program, or may be determined based on a switching signal generated by another mechanism, which is not limited herein in the embodiments of the present disclosure.

In an embodiment of the present disclosure, the feeding mechanism 100 is provided with two feeding pipes, and the second driving mechanism 400 drives the switching mechanism to switch the state, so as to switch between the feeding by the first feeding pipe 110 and the feeding by the second feeding pipe 120, so that after the consumable delivered in one of the first feeding pipe 110 and the second feeding pipe 120 is used up, the other of the first feeding pipe 110 and the second feeding pipe 120 can continue delivering the consumable without stopping the apparatus, achieving automatic continuous feeding of the apparatus and improving the working efficiency of the apparatus. In addition, the first feeding pipe 110 and the second feeding pipe 120 may also respectively deliver different types of consumables, and the second driving mechanism 400 drives the switching mechanism to switch the state, so as to flexibly switch the types of consumables to be extruded, improving the operation flexibility of the apparatus.

In practical applications, in an optional embodiment, the extrusion device may be applied to a 3D printer so as to deliver printing consumables, the A consumable and the B consumable may be consumables of the same color, and the extrusion device may achieve automatic continuous feeding of the consumables of the same color, thereby improving the printing efficiency of the 3D printer; and the A consumable and the B consumable may be consumables of different colors, so that the 3D printer can achieve two-color printing, thereby improving the flexibility of the 3D printer. It can be understood that the extrusion device may also be applied to other apparatuses, and the embodiment of the present disclosure is described by taking the extrusion device being applied to the 3D printer as an example.

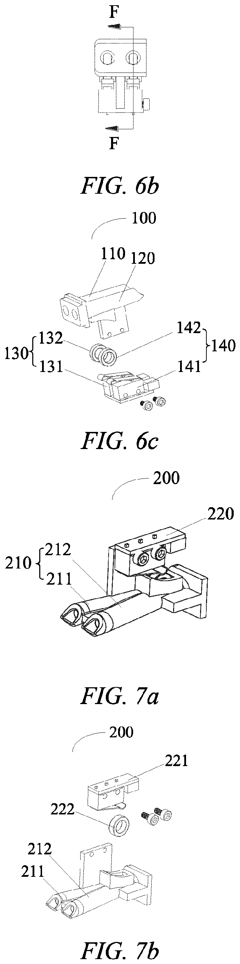

Optionally, as shown in FIGS. 6a to 6c, the feeding mechanism 100 further includes a first detection mechanism 130 and a second detection mechanism 140, where the first detection mechanism 130 corresponds to the first feeding pipe 110, the first detection mechanism 130 includes a first switch 131, the second detection mechanism 140 corresponds to the second feeding pipe 120, and the second detection mechanism 140 includes a second switch 141; and/or as shown in FIGS. 7a to 7b, the discharging mechanism 200 further includes a third detection mechanism 220, where the third detection mechanism 220 corresponds to the discharging pipe 210, and the third detection mechanism 220 includes a third switch 221.

When a consumable passes through the first feeding pipe 110, the first switch 131 is in a third state under the action of the consumable, and when no consumable passes through the first feeding pipe 110, the first switch 131 is in a fourth state; when a consumable passes through the second feeding pipe 120, the second switch 141 is in a fifth state under the action of the consumable, and when no consumable passes through the second feeding pipe 120, the second switch 141 is in a sixth state; and when a consumable passes through the discharging pipe 210, the third switch 221 is in a seventh state under the action of the consumable, and when no consumable passes through the discharging pipe 210, the third switch 221 is in an eighth state.

In the embodiment, the first detection mechanism 130 detects whether there is a consumable in the first feeding pipe 110 by obtaining a state of the first switch 131, and then determines whether there is material shortage, material supply interruption or other situations in the first feeding pipe 110. When the switching mechanism is in the first state, the consumable in the first feeding pipe 110 moves, and the first switch 131 is always in the first state. When the first detection mechanism 130 detects that the first switch 131 is switched from the third state to the fourth state, it is indicated that there is no consumable in the first feeding pipe 110, the second driving mechanism 400 can drive the switching mechanism to switch from the first state to the second state, the consumable in the second feeding pipe 120 moves, and the second switch 141 is always in the fifth state. Similarly, the second detection mechanism 140 detects whether there is a consumable in the second feeding pipe 120 by obtaining a state of the second switch 141, and then determines whether there is material shortage, material supply interruption or other situations in the second feeding pipe 110. In this way, a switching timing can be provided for the second driving structure 400, such that the second driving structure 400 can drive the switching mechanism to switch the state in time, so as to ensure timely continuous feeding of the extrusion device.

In addition, when the consumable needs to be returned, the third detection mechanism 220 detects whether there is a consumable in the discharging pipe 210 by obtaining a state of the third switch 221, and then determines whether the consumable is returned. On the one hand, it can be convenient to take out the remaining consumable in the discharging pipe 210; on the other hand, in a scenario where two different types of consumables are delivered alternately, such as a scenario of two-color printing, it can be accurately determined whether the previous type of consumable is returned from the common discharging channel of the discharging pipe 210, and then the latter type of consumable can smoothly enter the common discharging channel of the discharging pipe 210. In this way, a switching timing can be provided for the second driving structure 400, such that the second driving structure 400 can drive the switching mechanism to switch the state in time, so as to ensure timely material exchange of the extrusion device.

In a specific embodiment, the third state, the fifth state, and the seventh state are on states, and the fourth state, the sixth state, and the eighth state are off states. It will be appreciated that it is also possible that the third state, the fifth state and the seventh state are off states, and the fourth state, the sixth state and the eighth state are on states, which may be determined according to actual situations and is not limited herein.

The first detection mechanism 130 may correspond to any position on the first feeding pipe 110, and may specifically be arranged above or below any position on the first feeding pipe 110. In order to further improve the detection sensitivity of the first detection mechanism 130, the first detection mechanism 130 may optionally be located on the first feeding pipe 110 close to a feeding port. The second detection mechanism 140 may correspond to any position on the second feeding pipe 120, and may specifically be arranged above or below any position on the second feeding pipe 120. In order to further improve the detection sensitivity of the second detection mechanism 130, the second detection mechanism 140 may optionally be located on the second feeding pipe 120 close to a feeding port.

As shown in FIG. 6a, the first switch 131 and the second switch 141 may be arranged side by side. In order to improve the stability of the connection between the components, optionally, the first feeding pipe 110 could be connected to the second feeding pipe 120 by means of a connecting member, or the first switch 131 may be connected to the second switch 141 by means of a connecting member.

The third detection mechanism 220 may correspond to any position on the discharging pipe 210, and may specifically be arranged above or below any position on the discharging pipe 210. In order to further improve the detection sensitivity of the third detection mechanism 220, the third detection mechanism 220 can be located on a common delivery channel of the discharging pipe 210 close to the feeding mechanism 100, for example, when the discharging pipe 210 is a Y-shaped pipe, the third detection mechanism 220 can be located at the junction of the first pipe 211 and the second pipe 212 and the common delivery channel.

In an optional embodiment, 1) as shown in FIG. 6c, the first detection mechanism 130 further includes a first transitional component 132, where a first side of the first transitional component 132 abuts against the first switch 131; and when no consumable the first transitional component 132, a second side of the first transitional component 132 extends into the first feeding pipe 110. When a consumable passes through the first transitional component 132, the consumable drives the first transitional component 132 to move, such that the first switch 131 is in the third state; and/or 2) as shown in FIG. 6c, the second detection mechanism 140 further includes a second transitional component 142, where a first side of the second transitional component 142 abuts against the second switch 141; and when no consumable passes through the second transitional component 142, a second side of the second transitional component 142 extends into the second feeding pipe 120, and when a consumable passes through the second transitional component 142, the consumable drives the second transitional component 142 to move, such that the second switch 141 is in the fifth state; and/or 3) as shown in FIG. 7b, the third detection mechanism 220 further includes a third transitional component 222, where a first side of the third transitional component 222 abuts against the third switch 221; and when no consumable passes through the third transitional component 222, a second side of the third transitional component 222 extends into the discharging pipe 210, and when a consumable passes through the third transitional component 222, the consumable drives the third transitional component 222 to move, such that the third switch 221 is in the seventh state.

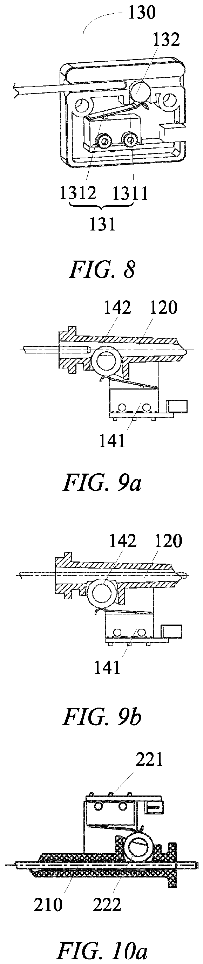

In a specific embodiment, taking 1) as an example, the first transitional component 132 may be in an axisymmetric shape, so that when the consumable moves in a forward direction or in a reverse direction, the first transitional component 132 can be driven to move. The first transitional component 132 may specifically be a cylinder, a sphere, a torus, a hemisphere, a wedge, etc., which is not limited herein. In an example, as shown in FIG. 8, the first switch 131 includes a third elastic component 1311 and a contact 1312. One end of the third elastic component 1311 is close to the contact 1312, and the other end of the third elastic component 1311 abuts against the first transitional component 132. When no consumable passes through the first transitional component 132, an elastic force of the third elastic component 1311 can make the first transitional component 132 partially extend into the first feeding pipe 110, and when a consumable passes through the first transitional component 132, the consumable can drive the first transitional component 132 to move, and the third elastic component 1311 can be compressed by means of the movement of the first transitional component 132, such that the third elastic component 1311 triggers the contact 1312 to turn on the first switch 131. The third elastic component 1311 may be an elastic piece or a spring.

In the embodiment, only any one, two or all of 1), 2) and 3) may be implemented, and preferably, 1), 2) and 3) may be implemented. For convenience of description and understanding, the movement of the consumable from the feeding mechanism 100 to the discharging mechanism 200 is regarded as a forward movement, and the movement of the consumable from the discharging mechanism 200 to the feeding mechanism 100 is regarded as a reverse movement. It will be appreciated that when the consumable moves forwardly or reversely to pass through the transitional component, the transitional component can be driven to move.

When the same type of consumables are delivered in the first feeding pipe 110 and the second feeding pipe 120, taking the second detection mechanism 140 as an example, a working flow of the second detection mechanism 140 is as follows.

Step 1: As shown in FIG. 9a, during feeding, and before a front end of the consumable passes through the second transitional component 142, the second transitional component 142 partially extends into the second feeding pipe 120, and the second switch 141 is in the off state. In this case, it may be considered as that the consumable is not activated in the second feeding pipe 120, the cause may be that the consumable is not inserted, or the consumable has not yet passed through the second transitional component 142, and a prompt message may be output to prompt the operator to activate the consumable.

Step 2: As shown in FIG. 9b, as the consumable moves forwardly to pass through the second transitional component 142, the second transitional component 142 may move under the drive of the consumable, and an acting force may be exerted on the second switch 141 by means of the movement of the second transitional component 142 to turn on the second switch 141. In an example, a first signal may be generated by switching the second switch 141 from the off state to the on state, and the first signal is used for indicating that the consumable has been activated. In this case, the second driving mechanism 400 is used for driving the switching mechanism to be in the first state, and the first driving mechanism 300 can drive the consumable in the second feeding pipe 120 to move forwardly so as to start printing.

Step 3: During the feeding of the consumable in the second feeding pipe 120, the second transitional component 142 always exerts an acting force on the second switch 141, and the second switch 141 is always in the on state.

Step 4: During the feeding, and after a tail end of the consumable passes through the second transitional component 142, the acting force of the consumable on the second transitional component 142 disappears, the second transitional component 142 extends into the second feeding pipe 120, such that the acting force thereof on the second switch 141 also disappears, and the second switch 141 returns to the off state. In an example, a second signal may be generated by switching the second switch 141 from the on state to the off state, and the second signal may be used for indicating that the consumable in the second feeding pipe 120 is used up. In this case, the second driving mechanism 400 can drive the switching mechanism to switch the state, and after state switching, the first driving mechanism 300 can drive the consumable in the first feeding pipe 110 to move forwardly so as to continue printing.

When different types of consumables are delivered in the first feeding pipe 110 and the second feeding pipe 120, if the first feeding pipe 110 is currently delivering the A consumable, when the type of consumables needs to be switched based on a preset program while the common discharging channel of the discharging mechanism 200 is being occupied by the A consumable, the first driving mechanism 300 may first drive the A consumable to move reversely to return from the common discharging channel, and then drive the B consumable in the second feeding pipe 120 to move forwards into the common discharging channel. Taking an example that the consumable in the second feeding pipe 120 is currently being fed, a working flow of the third detection mechanism 220 is as follows.

Step 1: When consumable switching is determined based on a preset program, the first driving mechanism 300 can drive the B consumable in the second feeding pipe 120 to move reversely to start returning, as shown in FIG. 10a, as the consumable moves reversely and before the front end of the consumable passes through the third transitional component 222, the third transitional component 222 always exerts an acting force on the third switch 221, and the third switch 221 is always in the on state.

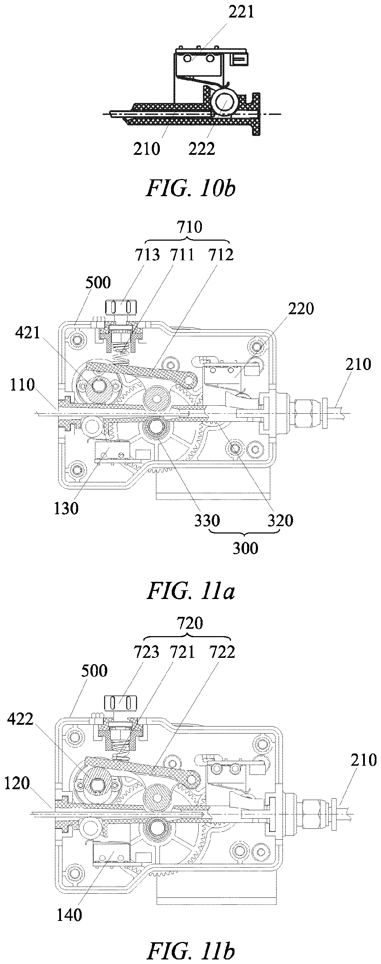

Step 2: As the consumable moves reversely and after the front end of the consumable passes through the third transitional component 222, as shown in FIG. 10b, the acting force of the consumable on the third transitional component 222 disappears, the third transitional component 222 extends into the discharging pipe 210, such that the acting force thereof on the third switch 221 also disappears, and the third switch 221 returns to the off state. In an example, a third signal may be generated by switching the third switch 221 from the on state to the off state, and the third signal may be used for indicating that the consumable has been returned.

In this step, when the third detection mechanism 220 is arranged at the junction of the first pipe 211 and the second pipe 212 and the common discharging channel, the second driving mechanism 400 can drive the switching mechanism to switch the state, and after state switching, the first driving mechanism 300 can drive the consumable in the first feeding pipe 110 to move forwardly so as to continue printing. When the third switch 221 is arranged spaced apart from the junction by a preset distance, the second driving mechanism 400 can drive the switching mechanism to switch the state after a preset time interval, and after state switching, the first driving mechanism 300 can drive the consumable in the first feeding pipe 110 to move forwardly so as to continue printing. The preset time is the time for the consumable to move a preset distance.

In the embodiment, providing the transitional component in the detection mechanism can enable the consumable, the transitional component and the switch to interact with one another, and the consumable can drive the transitional component to move so as to trigger a change in switch state, so that the sensitivity of the switch is improved; and the structure is simple, so that the entire detection mechanism do not occupy a large space, and the cost is also low. In addition, if the consumable moves reversely (during material returning), the consumable may also drive the transitional component so as to trigger a change in switch state, which can detect not only material supply interruption, material shortage or other situations of the consumable, but also the return of the consumable, so that the detection scenario of the detection mechanism is more flexible, and especially when the first detection mechanism 130, the second detection mechanism 140 and the third detection mechanism 220 are combined, an auxiliary effect may be played for continuous feeding, material exchange or other scenarios of the extrusion device.

Optionally, as shown in FIGS. 11a and 11b, the switching mechanism includes a first compression assembly 710 and a second compression assembly 720, where the first compression assembly 710 corresponds to the first feeding pipe 110, and the second compression assembly 720 corresponds to the second feeding pipe 120. When the switching mechanism is in the first state, the first compression assembly 710 and the first driving mechanism 300 compress the consumable in the first feeding pipe 110, such that the first driving mechanism 300 can drive the consumable in the first feeding pipe 110 to move; and when the switching mechanism is in the second state, the second compression assembly 720 and the first driving mechanism 300 compress the consumable in the second feeding pipe 120, such that the first driving mechanism 300 can drive the consumable in the second feeding pipe 120 to move.

In the embodiment, the first compression assembly 710 or the second compression assembly 720 and a first driving structure are controlled to compress the consumable, such that there is an interaction force between the first driving mechanism 300 and the A consumable, thereby driving the A consumable to move, or there is an interaction force between the first driving mechanism 300 and consumable B, thereby driving the B consumable to move. With such an arrangement, the structure is simple, and due to the presence of an extrusion force, the first driving mechanism 300 requires a small driving force to move the consumable, reducing the energy consumption of the first driving mechanism 300.

In an optional embodiment, as shown in FIG. 11a, the first compression assembly 710 includes a first elastic component 711 and a first connecting member 712, where a first side of the first connecting member 712 is connected to the first elastic component 711, and a second side of the first connecting member 712 corresponds to the first feeding pipe 110; and as shown in FIG. 11b, the second compression assembly 720 includes a second elastic component 721 and a second connecting member 722, where a first side of the second connecting member 722 is connected to the second elastic component 721, and a second side of the second connecting member 722 corresponds to the second feeding pipe 120. When the switching mechanism is in the first state, the first elastic component 711 is in a first extension state, such that the first connecting member 712 and the first driving mechanism 300 compress the consumable in the first feeding pipe 110, and the second elastic component 721 is in a second extension state; when the switching mechanism is in the second state, the first elastic component 711 is in a third extension state, and the second elastic component 721 is in a fourth extension state, such that the second connecting member 722 and the first driving mechanism 300 compress the consumable in the second feeding pipe 120; and the extension length of the first elastic component 711 in the first extension state is longer than the extension length thereof in the third extension state, and the extension length of the second elastic component 721 in the second extension state is shorter than the extension length thereof in the fourth extension state.

In the embodiment, the second driving mechanism 400 can drive the first elastic component 711 and the second elastic component 721 to change in the extension length, such that the switching mechanism is in the first state or the second state. Specifically, the first elastic component 711 and the second elastic component 721 are fixed, and particularly, the first elastic component and the second elastic component are fixed to the housing 500 or other members inside the housing 500, which is not limited herein.

When the switching mechanism is in the first state, as shown in FIG. 11a, on the A side, the first elastic component 711 is in the first extension state and has a longer extension length, the first elastic component 711 can drive the first connecting member 712 toward the A consumable in the first feeding pipe 110 and the first connecting member thus compresses the A consumable with the first driving mechanism 300, and the first driving mechanism 300 can drive the A consumable to move; and As shown in FIG. 11b, on the B side, the second elastic component 721 is in the second extension length and has a shorter extension length, the second elastic component 721 can drive the second connecting member 722 away from the B consumable in the second feeding pipe 120, and the second connecting member thus cannot compress the B consumable with the first driving mechanism 300, and the first driving mechanism 300 cannot drive the B consumable to move.

When the switching mechanism is in the second state (not shown), this case is contrary to the case where the switching mechanism is in the first state and can be understood specifically with reference to the description of the first state, which will not be described in detail herein.

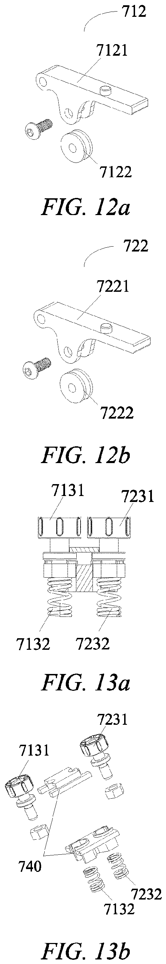

In an optional example of the embodiment, as shown in FIG. 12a, the first connecting member 712 includes a first pressing rod 7121 and a first sliding wheel 7122, where the first sliding wheel 7122 is connected to the side of the first pressing rod 7121 facing away from the first elastic component 711 in a rolling manner, and the first sliding wheel 7122 is used for coming into contact with the consumable in the first feeding pipe 110 when the switching mechanism is in the first state; and as shown in FIG. 12b, the second connecting member 722 includes a second pressing rod 7221 and a second sliding wheel 7222, where the second sliding wheel 7222 is connected to the side of the second pressing rod 7221 facing away from the second elastic component 721 in a rolling manner, and the second sliding wheel 7222 is used for coming into contact with the consumable in the second feeding pipe 120 when the switching mechanism is in the first state. In this example, providing a pressing rod can increase a contact area between an elastic component and a pressing rod, and when the elastic component is connected to a first side of the pressing rod and the sliding wheel is connected to a second side of the pressing rod, based on the lever principle, the elastic component only needs to exert a small driving force to impart a large force to the pressing rod, so that the switching mechanism has a high switching sensitivity.

In an example of the embodiment, as shown in FIG. 11a, the first compression assembly 710 further includes a first adjusting component 713, where the first adjusting component 713 is connected to the first elastic component 711 and is used for adjusting an elastic force of the first elastic component 711 in the first extension state; and as shown in FIG. 11b, the second compression assembly 720 further includes a second adjusting component 723, where the second adjusting component 723 is connected to the second elastic component 721 and is used for adjusting an elastic force of the second elastic component 721 in the fourth extension state.

In this example, the first adjusting component 713 can adjust an initial elastic force of the first elastic component 711, in other words, the first adjusting component 713 can adjust an initial extension length of the first elastic component 711, so as to determine an compressing force of the first elastic component 711 on the A consumable, so that the sensitivity of the first driving mechanism 300 driving the A consumable to move can be improved; and the second adjusting component 723 can adjust an initial elastic force of the second elastic component 721, in other words, the second adjusting component can adjust an initial extension length of the second elastic component 721, so as to determine an compressing force of the second elastic component 721 on "B" consumable, so that the sensitivity of the first driving mechanism 300 driving the B consumable to move can be improved.

In a specific embodiment, as shown in FIGS. 13a and 13b, optionally, the first adjusting component 713 may include a first screw knob 7131 and a first compression spring 7132, the first compression spring 7132 is connected to the first screw knob 7131, the switching mechanism may further include a fixing member 740, and the first screw knob 7131 and the first compression spring 7132 connected to each other may be fixed by means of the fixing member 740. The second adjusting component 723 may include a second screw knob 7231 and a second compression spring 7232, the second compression spring 7232 is connected to the second screw knob 7231, and the second screw knob 7231 and the second compression spring 7232 connected to each other may be fixed by means of the fixing member 740.

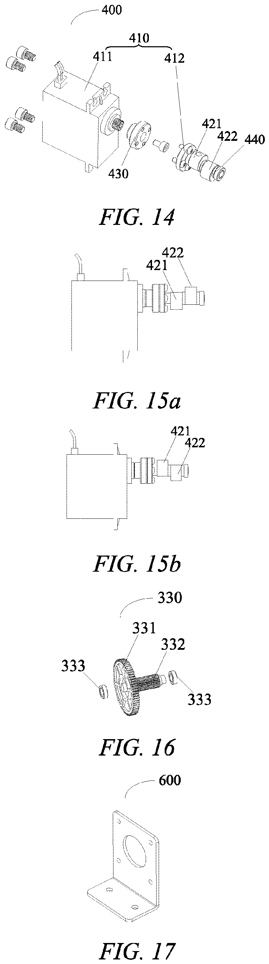

In an example of the embodiment, as shown in FIG. 14, the second driving mechanism 400 includes a driving assembly 410, a first movable member 421 and a second movable member 422, where the driving assembly 410 is connected to the first movable member 421 and the second movable member 422, and the driving assembly 410 is used for driving the first movable member 421 to be in a first position and the second movable member 422 to be in a fourth position such that the switching mechanism is in the second state, or for driving the first movable member 421 to be in a second position and the second movable member 422 to be in a third position such that the switching mechanism is in the first state.

In this example, the driving assembly 410 can drive the first movable member 421 to change in position, so as to assist the first elastic component 711 to control the position of the first connecting member 712, and can drive the second movable member 422 to change in position, so as to assist the second elastic component 721 to control the position of the second connecting member 722.

Specifically, the first elastic component 711 and the second elastic component 721 may be considered as that they are always in a compressed state.

When the first movable member 421 is in the second position and the second movable member 422 is in the third position, the switching mechanism is in the first state. As shown in FIG. 11a, on the A side, the first movable member 421 is in the second position and is spaced apart from the first connecting member 712, there is a movable space in a direction close to the A consumable for the first connecting member 712, and a pushing force generated by the first elastic component 711 recovering from the compressed state can drive the first connecting member 712 to move so as to compress the A consumable with the first driving mechanism 300; and as shown in FIG. 11b, on the B side, the second movable member 422 is in the third position and abuts against the second connecting member 722, there is no movable space in a direction close to the B consumable for the second connecting member 722, and the second elastic component 721 cannot drive the second connecting member 722 to move and the second connecting member thus cannot compress the B consumable with the first driving mechanism 300.

When the first movable member 421 is in the first position and the second movable member 422 is in the fourth position, the switching mechanism is in the second state (not shown), this case is contrary to the case where the switching mechanism is in the first state and can be understood specifically with reference to the description of the first state, which will not be described in detail herein.

In this example, optionally, as shown in FIG. 14, the driving assembly 410 includes a steering gear 411 and a wheel shaft 412, where the first movable member 421 is a first eccentric wheel, the second movable member 422 is a second eccentric wheel, and the steering gear 411 is connected to the wheel shaft 412 and is connected to the first eccentric wheel and the second eccentric wheel by means of the wheel shaft 412. The steering gear 411 may control the wheel shaft 412 to rotate, such that the first eccentric wheel is in the first position and the second eccentric wheel is in the fourth position, or the first eccentric wheel is in the second position and the second eccentric wheel is in the third position. In this way, based on the characteristic that the center of a circle of the eccentric wheel is not on an axis of rotation, the positions of the first eccentric wheel and the second eccentric wheel can be changed by controlling the wheel shaft 412 to rotate.

In a specific embodiment, the steering gear 411 may be fixed to the housing 500 by means of fasteners such as screws, nuts, etc. Optionally, the second driving mechanism 400 further includes a steering gear coupling 430 and a first bearing 440, where the steering gear 411 can control the wheel shaft 412 to rotate by means of the steering gear coupling 430, and the wheel shaft 412 can also play a supporting role by means of the first bearing 440, and the specific arrangement may depend on actual situations and is not limited herein. The steering gear 411 can control the wheel shaft 412 to rotate to position the wheel shaft 412 at 0° or at 180°, such that the first eccentric wheel may be switched between down and up, and the second eccentric wheel may be switched between up and down. It will be appreciated that the steering gear 411 can control the wheel shaft 412 to rotate to position the wheel shaft 412 at 180° or at 360°, and the specific setting may depend on actual situations and is not limited herein.

Taking an example that the steering gear 411 controls the wheel shaft 412 to be at 0° or at 180°, as shown in FIG. 15a, the steering gear 411 controls the wheel shaft 412 to be at 0°, with the first eccentric wheel being down, and the second eccentric wheel being up. As shown in FIG. 15b, the steering gear 411 controls the wheel shaft 412 to be at 180°, with the first eccentric wheel being up, and the second eccentric wheel being down.

Optionally, the first driving mechanism 300 includes an electric motor 310, a first transmission member 320 and a driving wheel 330, where the first transmission member 320 is connected to the electric motor 310 and the driving wheel 330, respectively, and the driving wheel 330 is used for driving the consumable in the first feeding pipe 110 or the second feeding pipe 120 to move; and as shown in FIG. 16, the driving wheel 330 includes a second transmission member 331 and a rotating wheel 332, where the second transmission member 331 is connected to the rotating wheel 332, and the second transmission member 331 is in transmission connection with the first transmission member 320.

In the embodiment, the consumable is driven to move by the driving wheel 330, and when the switching mechanism is in the first state, the driving wheel 330 is used for driving the A consumable in the first feeding pipe 110 to move; and when the switching mechanism is in the second state, the driving wheel 330 is used for driving the B consumable in the second feeding pipe 120 to move. In this way, the structure and driving principle of the driving wheel 330 are simple.

In a specific embodiment, only the driving wheel 330 may be arranged inside the housing 500 without taking up too much space, while the electric motor 310 may be arranged outside the housing 500. Optionally, as shown in FIG. 2, the extrusion device further includes a support 600, where the electric motor 310 may be fixed outside the housing 500 by means of the support 600. In an example, the support 600 is shown in FIG. 17. Optionally, the first transmission member 320 and the second transmission member 331 each may be a gear, and the two gears may mesh with each other for transmission. If necessary, as shown in FIG. 16, the driving wheel 330 may further include a second bearing 333, where the second bearing 333 may play a supporting role, which is not limited herein.

An embodiment of the present disclosure further provides a 3D printer, including the extrusion device described above. The 3D printer may be any type of existing printer, or a printer that will emerge in the future, which is not limited herein.

It should be noted that the embodiment of the embodiment of the extrusion device described above is similarly applicable to the embodiment of the 3D printer and can achieve the same technical effect, which will not be described in detail herein.

An exemplary embodiment of the embodiment of the present disclosure will be described below with reference to FIGS. 1 to 17.

An extrusion device includes a feeding mechanism 100, a discharging mechanism 200, a first driving mechanism 300, a switching mechanism and a second driving mechanism 400, where the feeding mechanism 100 includes a first feeding pipe 110 and a second feeding pipe 120; the discharging mechanism 200 includes a discharging pipe 210, and the discharging pipe 210 is connected to the first feeding pipe 110 and the second feeding pipe 120; the first driving mechanism 300 is used for driving a consumable in the first feeding pipe 110 or the second feeding pipe 120 to move; and the switching mechanism corresponds to the first feeding pipe 110 and the second feeding pipe 120, and the second driving mechanism 400 corresponds to the switching mechanism and is used for driving the switching mechanism to switch between a first state and a second state. When the switching mechanism is in the first state, the first driving mechanism 300 is used for driving the consumable in the first feeding pipe 110 to move; and when the switching mechanism is in the second state, the first driving mechanism 300 is used for driving the consumable in the second feeding pipe 120 to move.

The first feeding pipe 110 and the second feeding pipe 120 are arranged in parallel, and the discharging pipe 210 is a Y-shaped pipe that is extended by the first pipe 211 and the second pipe 212 at one end, where the first pipe 211 and the second pipe 212 are arranged at an included angle, and that is a common discharging channel at the other end. The first pipe 211 corresponds to the first feeding pipe 110, and the second pipe 212 corresponds to the second feeding pipe 120.

The feeding mechanism 100 further includes a first detection mechanism 130 and a second detection mechanism 140, where the first detection mechanism 130 corresponds to the first feeding pipe 110, the first detection mechanism 130 includes a first switch 131, the second detection mechanism 140 corresponds to the second feeding pipe 120, and the second detection mechanism 140 includes a second switch 141; and/or the discharging mechanism 200 further includes a third detection mechanism 220, where the third detection mechanism 220 corresponds to the discharging pipe 210, and the third detection mechanism 220 includes a third switch 221. When a consumable passes through the first feeding pipe 110, the first switch 131 is in a third state under the action of the consumable, and when no consumable passes through the first feeding pipe 110, the first switch 131 is in a fourth state; when a consumable passes through the second feeding pipe 120, the second switch 141 is in a fifth state under the action of the consumable, and when no consumable passes through the second feeding pipe 120, the second switch 141 is in a sixth state; and when a consumable passes through the third detection mechanism 220 and the discharging pipe 210, the third switch 221 is in a seventh state under the action of the consumable, and when no consumable passes through the discharging pipe 210, the third switch 221 is in a eighth state.

The first detection mechanism 130 further includes a first transitional component 132, where a first side of the first transitional component 132 abuts against the first switch 131; and when no consumable passes through the first transitional component 132, a second side of the first transitional component 132 extends into the first feeding pipe 110, and when a consumable passes through the first transitional component 132, the consumable drives the first transitional component 132 to move, such that the first switch 131 is in the third state; and/or the second detection mechanism 140 further includes a second transitional component 142, where a first side of the second transitional component 142 abuts against the second switch 141; and when no consumable passes through the second transitional component 142, a second side of the second transitional component 142 extends into the second feeding pipe 120, and when a consumable passes through the second transitional component 142, the consumable drives the second transitional component 142 to move, such that the second switch 141 is in the fifth state; and/or the third detection mechanism 220 further includes a third transitional component 222, where a first side of the third transitional component 222 abuts against the third switch 221; and when no consumable passes through the third transitional component 222, a second side of the third transitional component 222 extends into the discharging pipe 210, and when a consumable passes through the third transitional component 222, the consumable drives the third transitional component 222 to move, such that the third switch 221 is in the seventh state.

The switching mechanism includes a first compression assembly 710 and a second compression assembly 720, where the first compression assembly 710 corresponds to the first feeding pipe 110, and the second compression assembly 720 corresponds to the second feeding pipe 120. When the switching mechanism is in the first state, the first compression assembly 710 and the first driving mechanism 300 compress the consumable in the first feeding pipe 110, such that the first driving mechanism 300 can drive the consumable in the first feeding pipe 110 to move; and when the switching mechanism is in the second state, the second compression assembly 720 and the first driving mechanism 300 compress the consumable in the second feeding pipe 120, such that the first driving mechanism 300 can drive the consumable in the second feeding pipe 120 to move.

The first compression assembly 710 includes a first elastic component 711 and a first connecting member 712, where a first side of the first connecting member 712 is connected to the first elastic component 711, and a second side of the first connecting member 712 corresponds to the first feeding pipe 110; and the second compression assembly 720 includes a second elastic component 721 and a second connecting member 722, where a first side of the second connecting member 722 is connected to the second elastic component 721, and a second side of the second connecting member 722 corresponds to the second feeding pipe 120. When the switching mechanism is in the first state, the first elastic component 711 is in a first extension state, such that the first connecting member 712 and the first driving mechanism 300 compress the consumable in the first feeding pipe 110, and the second elastic component 721 is in a second extension state; when the switching mechanism is in the second state, the first elastic component 711 is in a third extension state, and the second elastic component 721 is in a fourth extension state, such that the second connecting member 722 and the first driving mechanism 300 compress the consumable in the second feeding pipe 120; and the extension length of the first elastic component 711 in the first extension state is greater than the extension length thereof in the third extension state, and the extension length of the second elastic component 721 in the second extension state is less than the extension length thereof in the fourth extension state.

The first connecting member 712 includes a first pressing rod 7121 and a first sliding wheel 7122, where the first sliding wheel 7122 is connected to the side of the first pressing rod 7121 facing away from the first elastic component 711 in a rolling manner, and the first sliding wheel 7122 is used for coming into contact with the consumable in the first feeding pipe 110 when the switching mechanism is in the first state; and the second connecting member 722 includes a second pressing rod 7221 and a second sliding wheel 7222, where the second sliding wheel 7222 is connected to the side of the second pressing rod 7221 facing away from the second elastic component 721 in a rolling manner, and the second sliding wheel 7222 is used for coming into contact with the consumable in the second feeding pipe 120 when the switching mechanism is in the second state.

The first compression assembly 710 further includes a first adjusting component 713, where the first adjusting component 713 is connected to the first elastic component 711 and is used for adjusting an elastic force of the first elastic component 711 in the first extension state; and the second compression assembly 720 further includes a second adjusting component 723, where the second adjusting component 723 is connected to the second elastic component 721 and is used for adjusting an elastic force of the second elastic component 721 in the fourth extension state.

The second driving mechanism 400 includes a driving assembly 410, a first movable member 421 and a second movable member 422, where the driving assembly 410 is connected to the first movable member 421 and the second movable member 422, and the driving assembly 410 is used for driving the first movable member 421 to be in a first position and the second movable member 422 to be in a fourth position such that the switching mechanism is in the second state, or for driving the first movable member 421 to be in a second position and for driving the second movable member 422 to be in a third position such that the switching mechanism is in the first state.

The driving assembly 410 includes a steering gear 411 and a wheel shaft 412, where the first movable member 421 is a first eccentric wheel, the second movable member 422 is a second eccentric wheel, and the steering gear 411 is connected to the wheel shaft 412 and is connected to the first eccentric wheel and the second eccentric wheel by means of the wheel shaft 412. The steering gear 411 may control the wheel shaft 412 to rotate, such that the first eccentric wheel is in the first position and the second eccentric wheel is in the fourth position, or the first eccentric wheel is in the second position and the second eccentric wheel is in the third position.

The first driving mechanism 300 includes an electric motor 310, a first transmission member 320 and a driving wheel 330, where the first transmission member 320 is connected to the electric motor 310 and the driving wheel 330, respectively, and the driving wheel 330 is used for driving the consumable in the first feeding pipe or the second feeding pipe to move; and the driving wheel 330 includes a second transmission member 331 and a rotating wheel 332, where the second transmission member 331 is connected to the rotating wheel 332, and the second transmission member 331 is in transmission connection with the first transmission member 320.

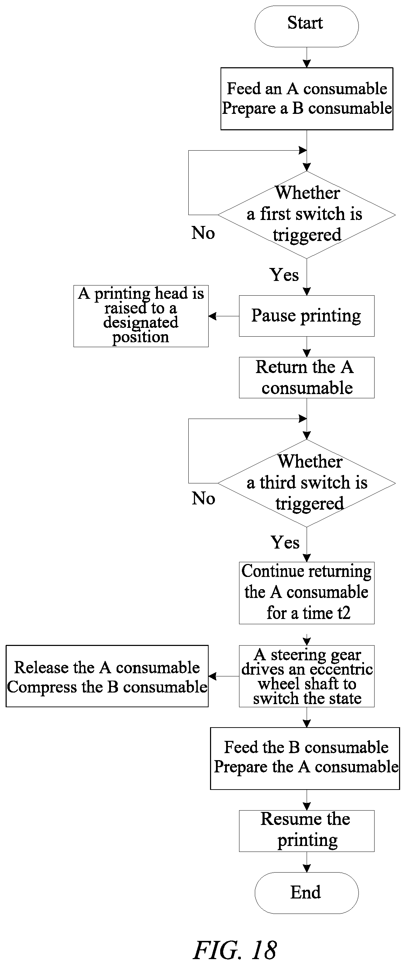

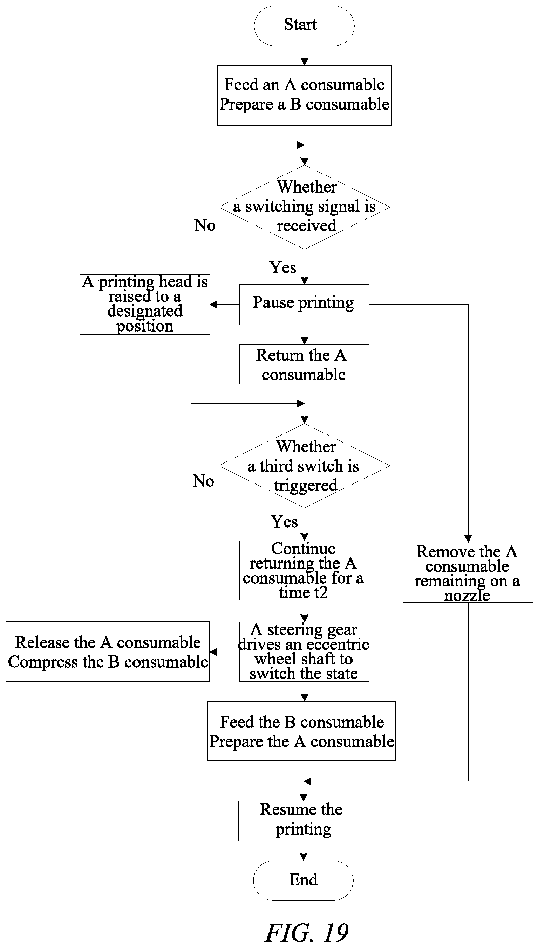

In the embodiment, a working flow of the extrusion device is as follows.
1. A working flow of an automatic continuous feeding function is as shown in FIG. 18.
   1) Currently, the steering gear 411 controls the wheel shaft 412 to be at 0°, with the first eccentric wheel 412 being down, and the second eccentric wheel being up. The A consumable is compressed by the first connecting member 712 and the driving wheel 330, the driving wheel 330 drives the A consumable to be fed so as to start printing, and at this time, the A consumable drives the first transitional component 132 to move, such that the first switch 131 is always in the on state. The B consumable is in an already prepared state, namely, the B consumable has been inserted into the second feeding pipe 120 and the front end of the B consumable is at the junction of the second pipe 212 and the common discharging channel, but the B consumable is not compressed by the second connecting member 722 and the driving wheel 330.
   2) The state of the first switch 131 is continuously monitored, as the A consumable moves forwardly and after the tail end passes through the first switch 131, the first switch 131 is switched from the on state to the off state, the 3D printer receives a state switching signal, and printing is paused.
   3) A 3D printing head is raised to a designated position to prevent the damage to a model due to high temperature, and the driving wheel 330 is controlled to rotate reversely, such that the remaining small part of the A consumable starts returning, at this time, the A consumable drives the third transitional component 222 to move, such that the third switch 221 is always in the on state, and then the state of the third switch 221 is continuously monitored. As the A consumable moves reversely and after the front end thereof passes through the third switch 221, the third switch 221 is switched from the on state to the off state, and the 3D printer obtains a time interval t1 from the time point when the A consumable starts returning to the time point when the state of the third switch 221 is switched. The driving wheel 330 further drives the A consumable to return for a time t2 by a return distance l2 of 10 mm (a distance between the junction of the first pipe 211 and the common discharging channel and the third switch 211), such that the A consumable is entirely returned from the common discharging channel.
   4) The steering gear 411 controls the wheel shaft to rotate to 180°, with the first eccentric wheel 412 being down, and the second eccentric wheel being up. The B consumable is compressed by the second connecting member 722 and the driving wheel 330, and the driving wheel 330 drives the B consumable to move for a time t1 + t2, such that the front end of the B consumable moves to a nozzle, and the printing is resumed. The operator manually loads a new A consumable and makes the new A consumable in an already prepared state, i.e., the new A consumable is inserted into the first feeding pipe 110, and the front end of the A consumable is located at the junction of the first pipe 211 and the common discharging channel, but the new A consumable is not compressed by the first connecting member 712 and the driving wheel 330. At this time, the B consumable drives the second transitional component 142 to move, such that the second switch 141 is always in the on state.
   It should be noted that if the B consumable is used up for printing, while it is detected that the A consumable is not in the already prepared state, the printing will be paused, and the printing will be resumed only when the A consumable is already in the prepared state. In addition, after the remaining small part of the A consumable is returned into the first feeding pipe 110, the operator may manually pull out the part of the A consumable. When the B consumable is printed first, and the A consumable is in the already prepared state, the flow is the same as the flow described above, and will not be described in detail herein.
2. A working flow of a two-color printing function is shown in FIG. 19.
   1) Currently, the steering gear 411 controls the wheel shaft 412 to be at 0°, with the first eccentric wheel 412 being down, and the second eccentric wheel being up. The A consumable is compressed by the first connecting member 712 and the driving wheel 330, and the driving wheel 330 drives the A consumable to be fed so as to start printing. The B consumable is in an already prepared state, namely, the B consumable has been inserted into the second feeding pipe 120 and the front end of the B consumable is at the junction of the second pipe 212 and the common discharging channel, but the B consumable is not compressed by the second connecting member 722 and the driving wheel 330.
   2) It is continuously monitored whether a switching signal of the preset program is received, and if the switching signal of the preset program is received, printing is paused.
   3) The 3D printing head is raised to a designated position to prevent the damage to a model due to high temperature, and the driving wheel 330 is controlled to rotate reversely, such that the A consumable starts returning, at this time, the A consumable drives the third transitional component 222 to move, such that the third switch 221 is always in the on state, and then the state of the third switch 221 is continuously monitored. As the A consumable moves reversely and after the front end thereof passes through the third switch 221, the third switch 221 is switched from the on state to the off state, and the 3D printer obtains a time interval t1 from the time point when the A consumable starts returning to the time point when the state of the third switch 221 is switched. The driving wheel 330 further drives the A consumable to return for a time t2 by a return distance l2 of 10 mm (a distance between the junction of the first pipe 211 and the common discharging channel and the third switch 211), such that the A consumable is entirely returned from the common discharging channel.
   4) The steering gear 411 controls the wheel shaft 412 to rotate to 180°, with the first eccentric wheel 412 being down, and the second eccentric wheel being up. The B consumable is compressed by the second connecting member 722 and the driving wheel 330, and the driving wheel 330 drives the B consumable to move for a time t1 + t2, such that the front end of the B consumable moves to a nozzle, and the printing is resumed. At this time, the A consumable is not compressed by the first connecting member 712 and the driving wheel 330.
   5) During return and switching, it is necessary to thoroughly remove the A consumable remaining on the nozzle of the 3D printing head and then wait for printing resuming. The printing is performed after cleaning.

It should be noted that if the switching signal is received again during the printing of the consumable B, it may be switched to feed the A consumable, which is specifically the same as the flow described above and will not be described in detail herein. In addition, if the A consumable or the B consumable is used up for printing, the printing is paused, the 3D printing head is raised to the designated position so as to prevent the damage to the model due to high temperature, a prompt message is output to prompt the operator to load new consumables, and in the process, a small part of spent consumables remaining in the extrusion device may be returned and pulled out.

It should be noted that the various optional embodiments described in the embodiments of the present disclosure can be achieved in combination with each other or individually, which is not limited in the embodiments of the present disclosure.

In the description of the present disclosure, it should be understood that orientation or position relationships indicated by the terms such as "upper", "lower", "left", "right", etc. are based on the orientation or position relationships shown in the accompanying drawings, which are only for ease of description of the present disclosure and for simplifying the description, rather than indicating or implying that a device or element referred to must have a particular orientation or be constructed or operated in a particular orientation. Therefore, these terms cannot be construed as limiting the present disclosure. In addition, the terms "first" and "second" are merely for the purpose of description, and should not be construed as indicating or implying the relative importance or implicitly indicating the number of technical features indicated. Thus, the features defined with "first" and "second" may explicitly or implicitly include one or more features. In the description of the present disclosure, "a plurality of" means two or more, unless otherwise specified.

In the description of the present application, it should be noted that unless otherwise explicitly specified and defined, the terms "mounting", "connecting", "connection", etc. should be understood in a broad sense, for example, they may be a fixed connection, a detachable connection, or an integrated connection; may be a mechanical connection or an electrical connection; and may be a direct connection, or an indirect connection via an intermediate medium, or may be communication between the interiors of two elements. For those of ordinary skill in the art, the specific meaning of the terms mentioned above in the present disclosure should be construed in specific situations.

The above-mentioned embodiments are described with reference to the accompanying drawings, other different forms and embodiments are also possible without departing from the principle of the present disclosure. Therefore, the present disclosure should not be constructed as a limitation to the embodiments presented herein. More precisely, these embodiments are provided such that the present disclosure will be thorough and complete, and will convey the scope of the present disclosure to those skilled in the art. In the drawings, the dimensions and relative dimensions of the components may be exaggerated for the sake of clarity. The terms used herein are only for the purpose of describing specific embodiments and are not intended to be limiting. The terms "comprising" and/or "including", when used in this specification, mean the presence of stated features, integers, members, and/or components, but do not exclude the presence or addition of one or more other features, integers, members, components, and/or groups thereof. Unless otherwise indicated, a range of values, when recited, includes the upper and lower limits of the range and any sub-ranges therebetween.

The embodiments described above are the preferred embodiments of the present disclosure. It should be noted that for a person of ordinary skill in the art, several improvements and modifications may be made without departing from the principle of the present disclosure, and these improvements and modifications also fall within the scope of protection of the present disclosure.

## Claims

**1.** An extrusion device, comprising a feeding mechanism, a discharging mechanism, a first driving mechanism, a switching mechanism and a second driving mechanism, the feeding mechanism comprises a first feeding pipe and a second feeding pipe, the discharging mechanism comprises a discharging pipe connected to the first feeding pipe and the second feeding pipe, the first driving mechanism is configured to drive the consumable in the first feeding pipe or the second feeding pipe to move, the switching mechanism corresponding to the first feeding pipe and the second feeding pipe, and the second driving mechanism corresponding to the switching mechanism and the switching mechanism to switch between a first state and a second state;
wherein when the switching mechanism is in the first state, the first driving mechanism is configured to drive the consumable in the first feeding pipe to move; and when the switching mechanism is in the second state, the first driving mechanism is configured to drive the consumable in the second feeding pipe to move.

**2.** The extrusion device according to claim 1, wherein the switching mechanism comprises a first compression assembly and a second compression assembly, the first compression assembly corresponding to the first feeding pipe, and the second compression assembly corresponding to the second feeding pipe; and
wherein when the switching mechanism is in the first state, the first compression assembly and the first driving mechanism compress the consumable in the first feeding pipe, such that the first driving mechanism drives the consumable in the first feeding pipe to move; and when the switching mechanism is in the second state, the second compression assembly and the first driving mechanism compress the consumable in the second feeding pipe, such that the first driving mechanism drives the consumable in the second feeding pipe to move.

**3.** The extrusion device according to claim 2, wherein the first compression assembly comprises a first elastic component and a first connecting member, a first side of the first connecting member is connected to the first elastic component, and a second side of the first connecting member is configured to be connected to the first feeding pipe; and the second compression assembly comprises a second elastic component and a second connecting member, a first side of the second connecting member is connected to the second elastic member, and a second side of the second connecting member is configured to be connected to the second feeding pipe; and
wherein when the switching mechanism is in the first state, the first elastic component is in a first extension state, such that the first connecting member and the first driving mechanism compress the consumable in the first feeding pipe, and the second elastic component is in a second extension state; when the switching mechanism is in the second state, the first elastic component is in a third extension state, and the second elastic component is in a fourth extension state, such that the second connecting member and the first driving mechanism compress the consumable in the second feeding pipe; and the extension length of the first elastic component in the first extension state is greater than the extension length thereof in the third extension state, and the extension length of the second elastic component in the second extension state is less than the extension length thereof in the fourth extension state.

**4.** The extrusion device according to claim 3, wherein the first connecting member comprises a first pressing rod and a first sliding wheel, the first sliding wheel is connected to the side of the first pressing rod facing away from the first elastic component in a rolling manner, and the first sliding wheel is configured to contact with the consumable in the first feeding pipe when the switching mechanism is in the first state;
wherein the second connecting member comprises a second pressing rod and a second sliding wheel, the second sliding wheel is connected to the side of the second pressing rod facing away from the second elastic component in a rolling manner, and the second sliding wheel is configured to contact with the consumable in the second feeding pipe when the switching mechanism is in the second state.

**5.** The extrusion device according to claim 3, wherein the first compression assembly further comprises a first adjusting component, the first adjusting component is connected to the first elastic component, the first adjusting component is configured to adjust an elastic force of the first elastic component in the first extension state;
wherein the second compression assembly further comprises a second adjusting component, the second adjusting component is connected to the second elastic component, the second adjusting component is configured to adjust an elastic force of the second elastic component in the fourth extension state.

**6.** The extrusion device according to claim 3, wherein the second driving mechanism comprises a driving assembly, a first movable member and a second movable member, wherein the driving assembly is connected to the first movable member and the second movable member, and the driving assembly is configured to drive the first movable member to be in a first position and the second movable member to be in a fourth position such that the switching mechanism is in the second state, or the driving assembly is configured to drive the first movable member to be in a second position and the second movable member to be in a third position such that the switching mechanism is in the first state.

**7.** The extrusion device according to claim 6, wherein the driving assembly comprises a steering gear and a wheel shaft, the first movable member is a first eccentric wheel, the second movable member is a second eccentric wheel, and the steering gear is connected to the wheel shaft, the steering gear is connected to the first eccentric wheel and the second eccentric wheel through the wheel shaft; and
wherein the steering gear is configured to control the wheel shaft to rotate, such that the first eccentric wheel is in the first position and the second eccentric wheel is in the fourth position, or the first eccentric wheel is in the second position and the second eccentric wheel is in the third position.

**9.** The extrusion device according to claim 1, wherein the feeding mechanism further comprises a first detection mechanism and a second detection mechanism, the first detection mechanism corresponding to the first feeding pipe, the first detection mechanism comprising a first switch, the second detection mechanism corresponds to the second feeding pipe, and the second detection mechanism comprising a second switch; and/or
the discharging mechanism further comprises a third detection mechanism, the third detection mechanism corresponding to the discharging pipe, and the third detection mechanism comprising a third switch; and
wherein when a consumable passes through the first feeding pipe, the first switch is in a third state under the action of the consumable, and when no consumable passes through the first feeding pipe, the first switch is in a fourth state; when a consumable passes through the second detection mechanism, the second switch is in a fifth state under the action of the consumable, and when no consumable passes through the second feeding pipe, the second switch is in a sixth state; and when a consumable passes through the discharging pipe, the third switch is in a seventh state under the action of the consumable, and when no consumable passes through the discharging pipe, the third switch is in an eighth state.

**10.** The extrusion device according to claim 9, wherein the first detection mechanism further comprises a first transitional member, and wherein a first side of the first transitional member abuts against the first switch; and when no consumable passes through the first transitional member, a second side of the first transitional member extends into the first feeding pipe, and when a consumable passes through the first transitional member, the consumable drives the first transitional member to move, such that the first switch is in the third state; and/or
the second detection mechanism further comprises a second transitional member, and wherein a first side of the second transitional member abuts against the second switch; and when no consumable passes through the second transitional member, a second side of the second transitional member extends into the second feeding pipe, and when a consumable passes through the second transitional member, the consumable drives the second transitional member to move, such that the second switch is in the fifth state; and/or
the third detection mechanism further comprises a third transitional member, and wherein a first side of the third transitional member abuts against the third switch; and when no consumable passes through the third transitional member, a second side of the third transitional member extends into the discharging pipe, and when a consumable passes through the third transitional member, the consumable drives the third transitional member to move, such that the third switch is in the seventh state.

**11.** The extrusion device according to claim 1, wherein the first driving mechanism comprises an electric motor, a first transmission member and a driving wheel, and wherein the first transmission member is connected to the electric motor and the driving wheel, respectively, and the driving wheel is used for driving the consumable in the first feeding pipe or the second feeding pipe to move; and
the driving wheel comprises a second transmission member and a rotating wheel, the second transmission member being connected to the rotating wheel, and the second transmission member being in transmission connection with the first transmission member.

**12.** A 3D printer, comprising an extrusion device according to any one of claims 1 to 11.
